Europäisches Patentamt

European Patent Office

Office européen des brevets

(11) Numéro de publication: **0 290 329 B1**

(12) # FASCICULE DE BREVET EUROPEEN

(45) Date de publication de fascicule du brevet: **07.04.93** (51) Int. Cl.5: **G02B 6/12**, G02F 1/03

(21) Numéro de dépôt: **88401056.2**

(22) Date de dépôt: **29.04.88**

(54) **Guide d'onde optique intégré, son procédé de fabrication, et son utilisation dans un modulateur électrooptique.**

(30) Priorité: **04.05.87 FR 8706247**

(43) Date de publication de la demande:
**09.11.88 Bulletin 88/45**

(45) Mention de la délivrance du brevet:
**07.04.93 Bulletin 93/14**

(84) Etats contractants désignés:
**DE GB IT NL SE**

(56) Documents cités:
**US-A- 4 400 052**

**PATENT ABSTRACTS OF JAPAN, vol. 11, no. 26 (P-539)[2473], 24 janvier 1987; & JP-A-61 198 106**

**IEEE TRANSACTIONS ON MICROWAVE THEORY AND TECHNIQUES, vol. MTT-30, no. 8, août 1982, pages 1121-1137, IEEE, New York, US; R.C. Alferness: "Waveguide electrooptic modulators"**

**PATENT ABSTRACTS OF JAPAN, vol. 9, no. 9 (P-327)[1732] 16 janvier 1985; & JP-A-59 157 602**

(73) Titulaire: **THOMSON-CSF**
**51, Esplanade du Général de Gaulle**
**F-92800 Puteaux(FR)**

(72) Inventeur: **Vatoux, Sylvie**
**THOMSON-CSF SCPI 19, avenue de Messine**
**F-75008 Paris(FR)**
Inventeur: **Papuchon, Michel**
**THOMSON-CSF SCPI 19, avenue de Messine**
**F-75008 Paris(FR)**
Inventeur: **Lefevre, Hervé**
**THOMSON-CSF SCPI 19, avenue de Messine**
**F-75008 Paris(FR)**

(74) Mandataire: **Turlèque, Clotilde et al**
**THOMSON-CSF, SCPI, B.P. 329, 50, rue Jean-Pierre Timbaud**
**F-92402 Courbevoie Cédex (FR)**

EP 0 290 329 B1

PATENT ABSTRACTS OF JAPAN, vol. 6, no. 171 (P-140)[1049], 4 septembre 1982; & JP-A-57 88 411

JOURNAL OF OPTICAL COMMUNICATIONS, vol. 6, no. 1, mars 1985, pages 14-17, Fachverlag Schiele & Schön, DE; A. RASCH et al.: "Suppression of outdiffusion in Ti: LiNbO3"

JOURNAL OF OPTICAL COMMUNICATIONS, vol. 1, no. 2, novembre 1982, pages 64-73, Fachverlag Schiele & Schön, DE; J. NODA: "Ti-diffused LiNbO3 waveguides and modulators"

## Description

L'invention concerne les guides d'onde optique intégrés à confinement latéral, leur procédé de fabrication, et leur utilisation en optique intégrée.

Les guides d'onde optique sont de plus en plus utilisés non seulement pour la transmission de l'information mais aussi pour le traitement de l'information car ils permettent de grandes rapidités de traitement, cet aspect traitement de l'information a donné naissance à la technologie dite "optique intégrée" relative à la propagation lumineuse dans des guides d'ondes diélectriques réalisés sous forme planaire, sur des substrats transparents de longueur d'onde choisie.

Classiquement, les guides d'ondes optiques à confinement latéral sont réalisés à la surface d'un monocristal de niobate de lithium, par dopage du cristal, généralement avec du titane introduit par diffusion thermique. La région dopée voit son indice de réfraction augmenter, et devient donc guidante pour la lumière dans une certaine gamme de longueurs d'onde.

Lorsque l'on recherche un guidage avec confinement dans deux dimensions, on diffuse un ruban de titane dont le motif est identique au cheminement de lumière désiré. On obtient ainsi une région dopée d'indice supérieur à celui du substrat, analogue à un choeur de fibre optique, cheminant en surface du cristal avec la géométrie désirée.

Des procédés complémentaires peuvent être utilisés soit pour abaisser l'indice de réfraction de part et d'autre du guide et empêcher la formation d'un guide uniforme en surface, soit pour élever encore selon un profil particulier, l'indice à l'intérieur de la zone guidante. Voir par exemple le document japonais JP-A-57 88411.

Mais, lorsque l'on diffuse thermiquement le titane dans le cristal de niobate de lithium, plusieurs effets peuvent contribuer à développer des charges électriques à sa surface :
- l'effet pyroélectrique qui fait apparaître un flux de charges électriques suivant l'axe optique lorsqu'une variation de température affecte le cristal
- l'effet piezo-électrique ou apparition d'une tension lorsqu'une déformation mécanique affecte le cristal par exemple lors de la dilatation thermique.

Ces charges peuvent être drainées par les rubans de titane à diffuser. Mais en général ces rubans présentent des interruptions de quelques microns à une dizaine de micron dues soit aux imperfections de la lithographie, soit au motif lui-même. Dans ce cas au lieu de permettre la neutralisation des charges, et donc l'uniformisation du potentiel, les rubans peuvent ramener des différences de potentiel importantes de part et d'autre de leurs discontinuités ; le champ électrique très élevé localement pouvant alors entrainer une destruction localisée du cristal si la rigidité diélectrique est insuffisante. On constate alors un éclatement du cristal qui vient interrompre le guide, amenant des pertes de propagation supplémentaires.

Par ailleurs, en même temps que le guide est réalisé par diffusion du ruban de titane, un guide plan parasite est créé par l'exodiffusion d'oxyde de lithium pendant le cycle de diffusion thermique.

Enfin, un intérêt essentiel de tels guides d'ondes réalisés dans le niobate de lithium est qu'ils présentent l'effet Pockels, c'est-à-dire qu'il est possible de moduler la constante de propagation de l'onde guidée, c'est-à-dire la phase de l'onde, par application d'un champ électrique variable dans le temps au guide. Des configurations particulières de circuits guidés peuvent permettre de moduler la lumière en amplitude, de commuter des signaux lumineux, de réaliser des fonctions de traitement de signal etc... Le champ électrique est appliqué grâce à des électrodes planaires placées de telle sorte que le guide optique subisse la variation d'indice de réfraction souhaitée. Pour cela la position des électrodes et l'orientation cristallographique du substrat sont adaptées aux fonctions désirées.

Cependant il a été constaté expérimentalement que le champ électrique créé entre les électrodes à l'intérieur du guide étaient inhomogènes, le matériau traversé étant anisotrope et inhomogène, et ceci étant dû au processus de diffusion thermique utilisé. Avec des électrodes planaires disposées aux abords du guide, dans certaines configurations, les lignes de champ obtenues parcourent la région dopée et la région non dopée, et un phénomène de relaxation intervient alors si le matériau présente des régions de constantes diélectriques et de résistivité différentes. De plus la répartition des potentiels électriques entre les deux régions varie suivant la fréquence utilisée. En conséquence le champ électrique effectivement appliqué au guide varie avec la fréquence ce qui se traduit par une variation de l'efficacité de modulation électrooptique apparente qui intervient aux alentours de 1 KHz et qui peut atteindre un facteur 1,5. Ce phénomène est particulièrement préjudiciable à l'utilisation basse fréquence, par exemple pour le codage de signaux en écoute sous-marine, ou aux utilisations nécessitant une large bande pour le traitement de signal en gyrométrie à fibre par exemple.

Par ailleurs on a proposé dans le document japonais JP-A-61 198106 un procédé dans lequel on protège le substrat de niobate de lithium pendant la gravure d'un ruban de titane à partir d'un film de titane

EP 0 290 329 B1

en arrêtant la gravure avant d'avoir atteint le substrat.

Dans un autre document japonais JP-A-59 157602, on forme un guide d'onde à partir d'une couche uniforme de titane, le substrat ayant été préalablement fragilisé dans la zone choisie pour former le guide d'onde.

L'invention a pour objet un guide d'onde optique intégré à confinement latéral dont les propriétés sont très sensiblement améliorées tant du point de vue de leur transmission optique que de leur comportement électrooptique et électrique. En particulier le guide d'onde optique intégré suivant l'invention permet d'éviter les inconvénients décrits ci-dessus, en uniformisant le potentiel électrique à la surface du cristal lors de la montée en température, en réduisant le phénomène d'exodiffusion d'oxyde de lithium qui crée un guide d'onde parasite, et en homogénéisant les propriétés diélectriques du matériau au voisinage du guide de façon à obtenir un comportement de modulation électrooptique indépendant de la fréquence du signal électrique appliqué.

Selon l'invention, un guide d'onde optique intégré à confinement latéral comportant un substrat de niobate de lithium ayant au moins une zone centrale dopée au moyen d'un dopant approprié, d'indice supérieur à celui du substrat et s'étendant à la surface du cristal selon la configuration souhaitée, la zone centrale étant flanquée de zones latérales dopées au moyen du même dopant, est caractérisé en ce que la concentration dans les zones latérales est de l'ordre de 10% de la concentration dans la zone centrale et est telle que la propagation d'onde guidée dans la zone centrale soit toujours possible.

L'invention a également pour objet un premier procédé de fabrication d'un tel guide d'onde optique intégré, selon la revendication 5, un deuxième procédé de fabrication selon la revendication 6 et leur utilisation notamment pour réaliser un modulateur électrooptique, par exemple un modulateur de phase ou un commutateur.

L'invention sera mieux comprise et d'autres caractéristiques apparaîtront à l'aide de la description qui suit en référence aux figures annexées.

- Les figures 1a, 1b et 1c sont des vues en coupe de modulateurs électrooptiques intégrés suivant l'art antérieur ;
- La figure 2 est une vue en coupe transversale d'un guide d'onde optique intégré selon l'invention ;
- La figure 3 est une vue en coupe transversale d'un modulateur électrooptique selon l'invention dans une forme de réalisation ;
- La figure 4 est un diagramme montrant des courbes de variations de la tension de modulation en fonction de la fréquence de cette tension de modulation ;
- La figure 5 est une vue en coupe transversale d'un commutateur de type COBRA utilisant des guides optiques intégrés selon l'invention ;
- La figure 6 est un schéma électrique équivalent.

Sur ces figures, les mêmes éléments ont été désignés par les mêmes repères.

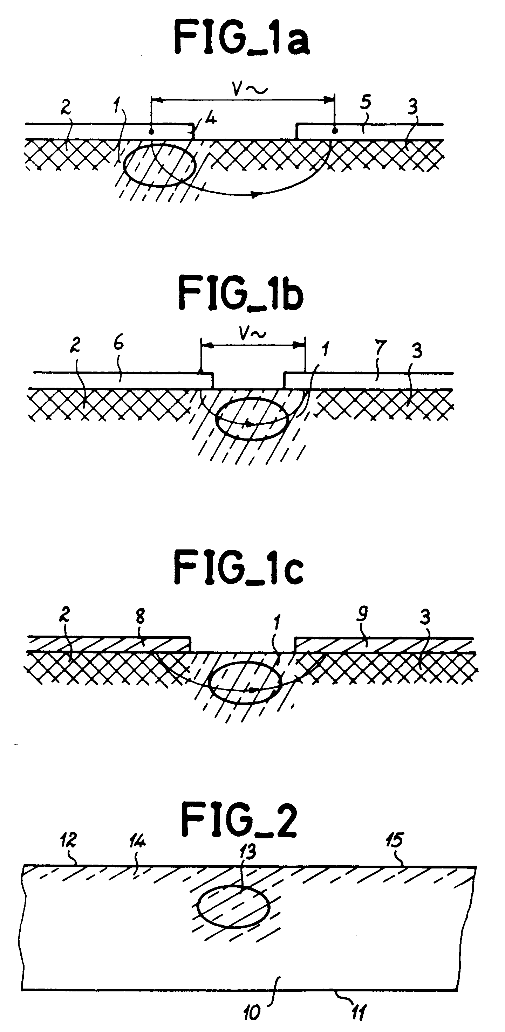

Les figures 1a, 1b et 1c représentent des structures de modulateurs à effet électrooptique selon l'art antérieur. Sur la figure 1a, la zone de guide obtenue par un dopage au titane, 1, est flanquée de deux zones latérales, 2 et 3, non dopées.

Sur la figure 1a une électrode 4 recouvre une zone latérale et la zone de guidage, tandis qu'une autre électrode 5 est uniquement placée sur l'autre zone latérale. Dans ce cas lorsqu'un champ électrique est appliqué entre les deux électrodes 4 et 5, les lignes de champ traversent des zones non homogènes.

Sur la figure 1b des électrodes 6 et 7 sont placées de part et d'autre du guide et recouvrent partiellement la zone dopée. Dans ce cas les lignes de champ électrique traversent une zone de matériau homogène.

Sur la figure 1c les électrodes 8 et 9 ne recouvrent que les zones latérales du guide non dopées. Dans ce cas comme dans le cas de la figure 1, les lignes de champ traversent des zones de matériau non homogènes.

Lors du processus de diffusion thermique comme indiqué ci-dessus un phénomène parasite est créé par l'exodiffusion d'oxyde de lithium qui tend à la création d'un guide d'onde uniforme en surface, dans la zone quadrillée sur les figures 1a, 1b et 1c, confiné perpendiculairement à la surface.

De plus, comme indiqué ci-dessus également, la diffusion thermique du titane dans le cristal de niobate de lithium tend à développer des charges électriques à la surface qui peuvent être drainées par les rubans de titane. Mais si ces rubans présentent des interruptions, des différences de potentiel importantes sont ramenées de part et d'autre des discontinuités, et l'on constate un éclatement du cristal qui vient interrompre le guide amenant des pertes de propagation supplémentaires.

Enfin, les lignes de champ parcourant la région dopée et la région non dopée, notamment dans les exemples représentés sur les figures 1a et 1c, la répartition des potentiels électriques entre les deux régions varie suivant la fréquence utilisée. En conséquence le champ électrique appliqué au guide varie

4

avec la fréquence.

Selon la présente invention, un guide d'onde optique tel que représenté sur la figure 2 est formé dans un substrat 10 en niobate de lithium qui a une épaisseur et une largeur de quelques millimètres et une longueur pouvant varier d'un millimètre à quelques dizaines de millimètres. Ce substrat 10 présente une face inférieure 11 qui permet son maintien sur un support non représenté et une face supérieure 12. Sur cette face supérieure 12, le substrat 10 présente des zones longitudinales centrales, telles que 13, et des zones longitudinales latérales adjacentes à ces zones centrales, telles que 14 et 15, qui sont toutes dopées au titane mais à des concentrations différentes selon qu'il s'agit de la zone centrale ou des zones latérales, en outre, leurs épaisseurs sont différentes.

Les caractéristiques de concentration et de dimensions sont par exemple les suivantes :

$$- \text{Rapport des concentrations :}$$
$$R = \frac{\text{Concentration titane (zone 14 ou 15)}}{\text{Concentration titane (zone 13)}} \simeq 10\%$$

- Profondeur des zones 13, 14, 15 ≃ quelques microns
- Epaisseur de la couche de titane dans la zone 13 avant diffusion : 500 Å à 900Å
- Largeur de la bande de titane dans la zone 13 : 3 à 7 microns.
- Température de diffusion : 1000°C
- Temps de diffusion : 6h

Ces caractéristiques montrent que la concentration en titane des zones latérales 14 et 15 est largement inférieure à celle de la zone centrale 13, ceci afin de toujours permettre un guidage optique dans la zone centrale.

Par l'effet de dopage en titane, la zone centrale 13 a un indice de réfraction légèrement supérieur de quelques millièmes à un pourcent à celui du substrat 10, égal par exemple à 2,205 alors que celui du substrat est égal à 2,200 pour une longueur d'onde optique de 0,85 $\mu$m : on obtient ainsi un guide d'onde optique.

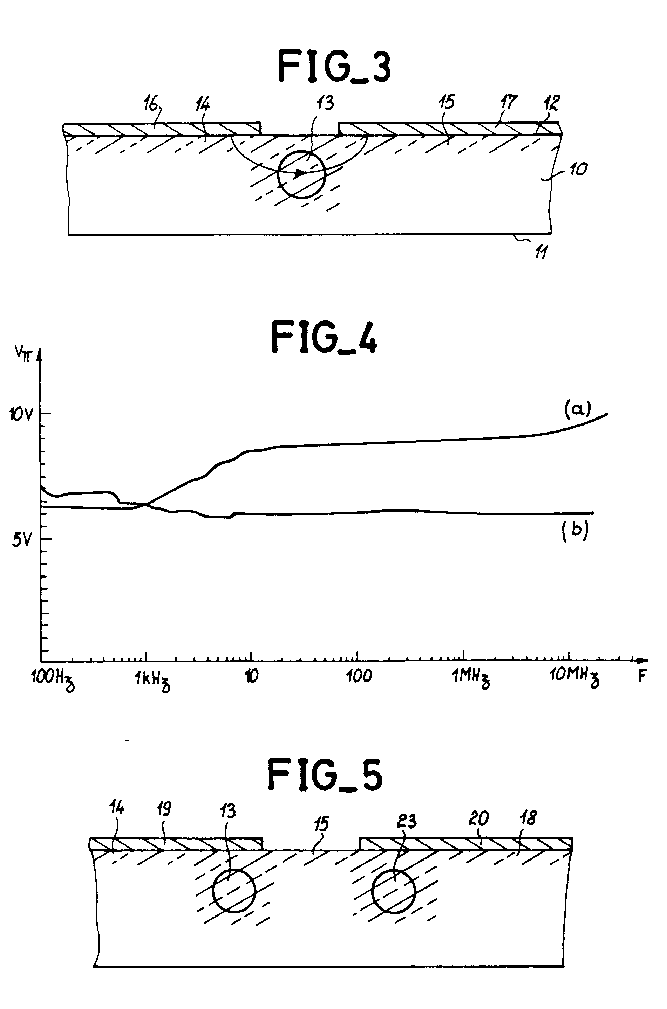

La figure 3 représente en coupe transversale un guide d'onde semblable à celui représenté sur la figure 2, qui a été pourvu d'électrodes pour réaliser une fonction de modulation électrooptique, par exemple pour une modulation de phase.

La face supérieure 12 supporte deux électrodes métalliques 16 et 17, par exemple en or, qui sont directement en contact avec ladite face comme sur la figure, ou qui en sont séparées par une mince couche tampon diélectrique (non représentée). Ces électrodes 16 et 17 sont disposées parallèlement aux bords de la zone centrale 13 et peuvent la recouvrir partiellement mais la plus grande partie de la zone sous jacente de ces électrodes est constituée par une partie des zones latérales 14 et 15. Les dimensions de ces électrodes sont par exemple les suivantes :
- espace interélectrodes : 6 $\mu$m
- largeur des électrodes : 50 $\mu$m
- épaisseur des électrons : 0,2 $\mu$m.

Les électrodes 16 et 17 sont reliées à une source de tension extérieure par des fils, par exemple en or, non représentés sur la figure 3.

Avec une telle structure de modulateur électrooptique, on obtient une courbe de réponse tension de commande/fréquence à effet électrooptique constant quasiment plate en fonction de la fréquence jusqu'à 10 MHz comme le montre la courbe (b) de la figure 2. La courbe de réponse (a) représentée sur le même diagramme est celle qui est obtenue avec un modulateur utilisant un guide formé avec seulement une zone centrale dopée au titane, comme représenté sur la figure 1c par exemple, et montre une variation de l'efficacité de modulation électrooptique apparente autour de 1 KHz, la tension de commande variant de 6,5 V environ à 9 V environ, soit dans un rapport de l'ordre de 1,5.

La figure 5 représente en coupe un commutateur de type COBRA, avec deux guides tels que celui représenté sur la figure 2, 13 et 23. Deux électrodes 19 et 20 recouvrent presque totalement les zones de guidage, et le rayonnement transmis dans l'un des guides peut, sur commande de la tension appliquée entre les électrodes, être transféré à l'autre guide.

Pour fabriquer un guide du type décrit en relation avec la figure 2, on peut mettre en oeuvre l'une ou l'autre de deux variantes de procédé de fabrication. Dans ces deux variantes, les phases initiales sont les mêmes que dans l'art antérieur jusqu'à la phase de dopage du substrat par du titane. Mais selon l'invention, on effectue non seulement la diffusion d'un ruban de titane, le guide d'onde étant alors formé dans la zone du substrat ainsi dopée, mais également la diffusion d'un film de titane sur toute la surface du substrat. Les conditions de diffusion et l'épaisseur du film de titane uniforme sont choisis de telle sorte que le dopage uniforme produit en surface permette toujours la propagation d'une onde guidée dans la zone centrale du ruban.

Plus précisément, sur un substrat de niobate de lithium, de vingt millimètres de long par exemple, on réalise par photolithographie sur la face supérieure du substrat un dépôt d'un ruban de titane qui a une épaisseur de 300 angströms environ et une largeur de 3 μm environ. Pour réaliser la diffusion du ruban de titane, le substrat est ensuite placé dans un four où il est soumis à un premier cycle de chauffe qui présente les caractéristiques suivantes :

- montée en température : 2 heures
- température de palier : 980°C
- durée de palier : 4 heures
- descente en température : 6 heures
- flux d'oxygène de 1,5L/minute : pendant toute la durée du cycle.

Par ce cycle, on réalise la diffusion thermique du titane du ruban dans la zone de substrat sous-jacente et on obtient un guide d'onde monomode à la longueur d'onde de 0,8 micron.

On dépose ensuite un film de titane ayant une épaisseur de 50 angströms environ sur toute la face supérieure du substrat, par exemple par pulvérisation radiofréquence. Pour la diffusion du film de titane, le substrat est à nouveau placé dans un four où il est soumis à un deuxième cycle de chauffe qui présente les caractéristiques suivantes :

- montée en température : 2 heures
- température du palier : 980°C
- durée du palier : 2 heures
- descente en température : 6 heures
- flux d'oxygène de 1,5L/minute : pendant toute la durée du cycle.

Le guide d'onde est alors terminé.

Des électrodes peuvent alors être réalisées par pulvérisation cathodique d'or sur la face supérieure du substrat, dans la configuration utile pour réaliser la fonction de modulation électrooptique souhaitée. Cette dernière étape permet d'aboutir par exemple aux structures de modulateur de phase ou de commutateur optique représentées sur les figures 3 et 5.

La deuxième variante est telle que le film de titane, qui doit recouvrir toute la face supérieure du substrat, est déposé juste après le dépôt du ruban de titane dont la diffusion thermique aboutira au guide d'onde optique. Le ruban et le film de titane sont alors diffusés thermiquement dans le substrat simultanément. Les deux cycles de chauffage sont alors remplacés par un seul cycle dont les caractéristiques sont les mêmes que le premier cycle de chauffe de la première variante. On obtient ainsi une diffusion thermique simultanée du ruban et du film de titane.

Les électrodes peuvent alors être déposées, selon les configurations souhaitées comme indiqué ci-dessus.

Bien entendu, les deux variantes du procédé de fabrication décrites ci-dessus peuvent être aménagées sans sortir du cadre de la présente invention, l'aspect important étant la diffusion au moins sur une grande partie de la surface du substrat et nécessairement au voisinage des zones guidantes, d'un film de titane de faible épaisseur par rapport au ruban de titane donnant naissance au guide, de manière à obtenir un dopage en titane très inférieur à celui de la zone du guide d'onde optique, de part et d'autre de la zone guidée.

La deuxième variante présente des avantages par rapport à la première. En premier lieu la présence d'un film de titane sur la surface de la face supérieure du substrat pendant le cycle de chauffe uniformise le potentiel électrique à la surface lors de la montée en température. En effet, les charges électriques dues aux effets pyroélectrique et piézoélectrique sont drainées par le film de titane, ce qui évite leur accumulation à certains endroits de discontinuité, notamment lorsque le ruban de titane présente des interruptions de quelques microns qui sont dues soit aux imperfections de la lithographie, soit au motif lui-même.

Un second avantage de la deuxième variante est évidemment un gain de temps et d'énergie, d'où un prix de revient plus faible, du fait d'un seul cycle de chauffe.

Un avantage commun aux deux variantes, dû, semble-t-il, à la diffusion du titane du film recouvrant toute la face supérieure du substrat, est la réduction du phénomène d'exodiffusion de l'oxyde de lithium pendant le cycle de chauffe, phénomène qui a pour conséquence la création d'un guide plan parasite aux abords du guide d'onde central.

En ce qui concerne les avantages résultant de la structure obtenue, ils consistent principalement en un homogénéïsation des propriétés diélectriques du matériau au voisinage du guide, notamment de la constante diélectrique et de la résistivité, car les lignes de force du champ électrique qui est appliqué un guide par l'intermédiaire des électrodes ne traversant que des zones dopées.

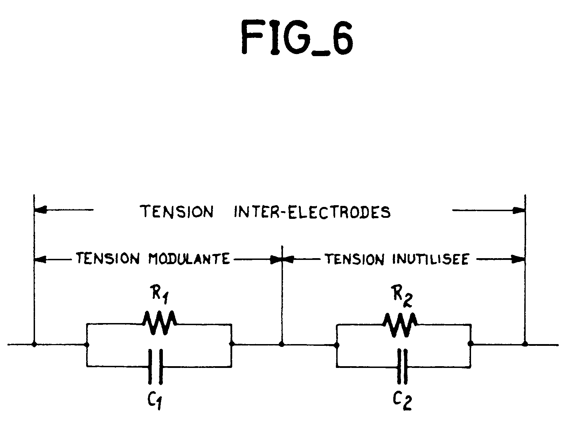

Le schéma électrique de la figure 6 montre que le modulateur électrooptique est équivalent à deux circuits Résistance-Condensateur en série auxquels on applique la tension inter-électrodes. Par exemple, le guide est représenté par la résistance R1 en parallèle avec le condensateur C1, aux bornes desquels apparaît la tension modulante, tandis que le substrat est représenté par la résistance R2 en parallèle avec le condensateur C2, aux bornes desquels est la tension inutilisée. Dans les modulateurs électrooptiques de l'art antérieur dans lesquels les lignes de champ électrique traversent une zone dopée et une zone non dopée, les valeurs de R1 et C1 sont très différentes de R2 et C2 du fait de cette dissymétrie entre les zones. En homogénéïsant ces deux zones par un dopage au titane, on atténue cette dissymétrie des valeurs et on obtient un comportement électrique régulier dans une large bande de fréquences.

**Revendications**

1. Guide d'onde optique intégré à confinement latéral comportant un substrat (10) de niobate de lithium ayant au moins une zone centrale (13) dopée au moyen d'un dopant approprié, d'indice supérieur à celui du substrat et s'étendant à la surface du substrat selon la configuration souhaitée, la zone centrale étant flanquée de zones latérales (14, 15) dopées au moyen du même dopant, caractérisé en ce que la concentration dans les zones latérales est de l'ordre de 10% de la concentration dans la zone centrale et est telle que la propagation d'onde guidée dans la zone centrale soit toujours possible.

2. Guide d'onde selon la revendication 1, caractérisé en ce que le dopant est le titane.

3. Guide d'onde selon l'une des revendications 1 et 2, caractérisé en ce que toute la surface du substrat est dopée.

4. Guide d'onde selon l'une des revendications 1 à 3, caractérisé en ce que la profondeur de la zone centrale est au moins égale à celle des zones latérales.

5. Procédé de fabrication d'un guide d'onde intégré à confinement latéral comportant un substrat (10) de niobate de lithium ayant au moins une zone centrale (13) dopée au moyen d'un dopant approprié, d'indice supérieur à celui du substrat, caractérisé en ce qu'il comprend les opérations suivantes :
   - déposer successivement dans l'ordre sur le substrat un ruban de dopant s'étendant à la surface du substrat selon la configuration souhaitée et un film de dopant d'épaisseur moindre que celle du ruban, ce film s'étendant par dessus le ruban et de part et d'autre du ruban,
   - diffuser simultanément par diffusion thermique au cours d'un cycle de chauffage et refroidissement le ruban et le film dans le substrat pour obtenir respectivement la zone centrale dopée et des zones latérales (14 et 15), de part et d'autre de la zone centrale, dopées avec le même dopant mais à des concentrations moindres, telle que la propagation d'onde guidée dans la zone centrale soit toujours possible.

6. Procédé de fabrication d'un guide d'onde intégré, à confinement latéral comportant un substrat (10) de niobate de lithium ayant au moins une zone centrale (13) dopée au moyen d'un dopant approprié , d'indice supérieur à celui du substrat, caractérisé en ce qu'il comprend successivement dans l'ordre les opérations suivantes :
   - déposer un ruban de dopant s'étendant à la surface du substrat selon la configuration souhaitée,
   - diffuser le ruban par diffusion thermique au cours d'un premier cycle de chauffage et refroidissement,
   - déposer un film de dopant d'épaisseur moindre que celle du ruban sur le substrat, et
   - diffuser le film par diffusion thermique au cours d'un second cycle de chauffage et refroidissement pour obtenir la zone centrale dopée et des zones latérales (14 et 15), de part et d'autre de la zone centrale, dopées avec le même dopant mais à des concentrations moindres.

7. Modulateur électrooptique comportant au moins un guide d'onde réalisé selon l'une quelconque des revendications 5 et 6, caractérisé en ce qu'il comporte, en outre, des électrodes planaires (16 et 17) déposées à la surface du substrat ainsi dopé s'étendant le long de la zone centrale (13).

8. Modulateur selon la revendication 7, caractérisé en ce que les électrodes s'étendent sur les zones latérales de part et d'autre de la zone centrale pour obtenir un modulateur de phase.

9.  Commutateur comportant au moins deux guides d'onde réalisés selon l'une quelconque des revendications 5 et 6, et comportant en outre des électrodes planaires (19 et 20) déposées à la surface du substrat ainsi dopé, caractérisé en ce que les guides d'onde sont adjacents, ayant une zone latérale commune (15) et deux zones latérales extrêmes (14 et 18), et en ce que les électrodes recouvrent respectivement chacune une zone centrale et la zone latérale extrême contigüe.

**Claims**

1.  An integrated optical waveguide with lateral confinement comprising a substrate (10) of lithium niobate having at least one central zone (13) doped by means of an appropriate dopant, of an index greater than that of the substrate and extending to the surface of the substrate according to the desired configuration, the central zone being flanked by lateral zones (14, 15) doped by means of the same dopant, characterised in that the concentration in the lateral zones is of the order of 10% of the concentration in the central zone and is such that propagation of the guided wave in the central zone is always possible.

2.  A waveguide according to claim 1, characterised in that the dopant is titanium.

3.  A waveguide according to one of Claims 1 and 2, characterised in that the whole surface of the substrate is doped.

4.  A waveguide according to one of Claims 1 to 3, characterised in that the depth of the central zone is at least equal to that of the lateral zones.

5.  A process for manufacturing an integrated waveguide with lateral confinement comprising a substrate (10) of lithium niobate having at least one central zone (13) doped by means of an appropriate dopant, of an index greater than that of the substrate, characterised in that it comprises the following operations:
    - depositing successively and in order on the substrate a strip of dopant extending to the surface of the substrate according to the desired configuration and a film of dopant of a lesser thickness than that of the strip, this film extending over the strip and on either side of the strip,
    - simultaneously diffusing by thermal diffusion during a heating and cooling cycle the strip and the film in the substrate in order to obtain respectively the doped central zone and the lateral zones (14 and 15), on either side of the central zone, doped with the same dopant but at lower concentrations such that propagation of the guided wave in the central zone is always possible.

6.  A process for manufacturing an integrated waveguide with lateral confinement comprising a substrate (10) of lithium niobate having at least one central zone (13) doped by means of an appropriate dopant, of an index greater than that of the substrate, characterised in that it comprises successively and in order the following operations:
    - depositing a strip of dopant on the surface of the substrate. according to the desired configuration,
    - diffusing the strip by thermal diffusion during a first heating and cooling cycle,
    - depositing a film of dopant of a lesser thickness than that of the strip on the substrate, and
    - diffusing the film by thermal diffusion during a second heating and cooling cycle in order to obtain the doped central zone and the lateral zones (14 and 15), on either side of the central zone, doped with the same dopant but at lower concentrations.

7.  An electro-optical modulator comprising at least one waveguide produced according to any one of Claims 5 and 6, characterised in that it further comprises planar electrodes (16 and 17) deposited on the surface of the substrate thus doped, and extending along the central zone (13).

8.  A modulator according to Claim 7, characterised in that the electrodes extend over the lateral zones on either side of the central zone in order to obtain a phase modulator.

9.  A switch comprising at least two waveguides produced according to any one of Claims 5 and 6, and further comprising planar electrodes (19 and 20) deposited on the surface of the substrate thus doped, characterised in that the waveguides are adjacent, having a common lateral zone (15) and two outer lateral zones (14 and 18), and in that the electrodes each cover respectively a central zone and a contiguous outer lateral zone.

**Patentansprüche**

1. Integrierter Lichtleiter mit seitlicher Einschließung, der ein Substrat (10) aus Lithiumniobat mit mindestens einer mit einem geeigneten Dotiermittel dotierten zentralen Zone (13), deren Brechungsindex größer als der des Substrats ist und die sich auf der Oberfläche des Substrats gemäß der gewünschten Konfiguration erstreckt, wobei die zentrale Zone von zwei Seitenzonen (14, 15) flankiert wird, die mit demselben Dotiermittel dotiert sind, dadurch gekennzeichnet, daß die Konzentration der Dotierung in den seitlichen Zonen etwa 10% der Konzentration in der zentralen Zone beträgt und so gewählt ist, daß die Fortpflanzung der geführten Welle in der zentralen Zone stets möglich bleibt.

2. Lichtleiter nach Anspruch 1, dadurch gekennzeichnet, daß das Dotiermittel Titan ist.

3. Lichtleiter nach einem der Ansprüche 1 und 2, dadurch gekennzeichnet, daß die ganze Oberfläche des Substrats dotiert ist.

4. Lichtleiter nach einem der Ansprüche 1 bis 3, dadurch gekennzeichnet, daß die Tiefe der zentralen Zone mindestens gleich der der Seitenzonen ist.

5. Verfahren zur Herstellung eines integrierten Lichtleiters mit seitlicher Einschließung, der ein Substrat (10) aus Lithiumniobat mit mindestens einer mit Hilfe eines geeigneten Dotiermittels dotierte zentrale Zone (13) besitzt, deren Brechungsindex größer als der des Substrats ist, dadurch gekennzeichnet, daß es folgende Phasen aufweist:
   - auf dem Substrat werden nacheinander ein Band eines Dotierstoffs, das sich auf der Oberfläche des Substrats gemäß der gewünschten Konfiguration erstreckt, und ein Film aus Dotierstoff mit einer geringeren Dicke als die des Bandes aufgebracht, wobei dieser Film sich über dem Band und zu beiden Seiten des Bandes erstreckt,
   - das Band und der Film werden gleichzeitig durch thermische Diffusion während eines Heiz- und Kühlzyklus in das Substrat hineindiffundiert, um die zentrale dotierte Zone und seitliche Zonen (14 und 15) zu beiden Seiten der zentralen Zone zu erhalten, die mit demselben Dotiermittel, aber geringeren Konzentrationen dotiert sind, derart, daß die Fortpflanzung der geführten Welle in der zentralen Zone immer noch möglich bleibt.

6. Verfahren zur Herstellung eines integrierten Lichtleiters mit seitlicher Einschließung, der ein Substrat (10) aus Lithiumniobat mit mindestens einer zentralen Zone (13) besitzt, die mit Hilfe eines geeigneten Dotiermittels dotiert wird und deren Brechungsindex größer als der des Substrats ist, dadurch gekennzeichnet, daß das Verfahren nacheinander die folgenden Phasen aufweist:
   - ein Band eines Dotiermittels wird auf die Oberfläche des Substrats aufgebracht, das sich über die gewünschte Konfiguration erstreckt,
   - man läßt das Band durch thermische Diffusion während eines ersten Heiz- und Kühlzyklus eindiffundieren,
   - ein Film aus Dotiermittel mit einer geringeren Dicke als die des Bandes wird auf das Substrat aufgebracht,
   - man läßt den Film durch thermische Diffusion während eines zweiten Heiz- und Kühlzyklus eindiffundieren, um die zentrale dotierte Zone und seitliche Zonen (14 und 15) zu beiden Seiten der zentralen Zone zu erhalten, die mit demselben Dotiermittel, aber geringeren Konzentrationen dotiert sind.

7. Elektro-optischer Modulator mit mindestens einem Lichtleiter, der nach einem der Ansprüche 5 und 6 hergestellt ist, dadurch gekennzeichnet, daß er außerdem Planarelektroden (16, und 17) aufweist, die auf die Oberfläche des so dotierten Substrats aufgebracht sind und sich entlang der zentralen Zone (13) erstrecken.

8. Modulator nach Anspruch 7, dadurch gekennzeichnet, daß die Elektroden sich über die seitlichen Zonen zu beiden Seiten der zentralen Zone erstrecken, um einen Phasenmodulator zu ergeben.

9. Schalter mit mindestens zwei Lichtleitern, die gemäß einem beliebigen der Ansprüche 5 und 6 hergestellt sind und mit zwei Planarelektroden (19 und 20), die auf die Oberfläche des so dotierten Substrats aufgebracht sind, dadurch gekennzeichnet, daß die Lichtleiter nebeneinander verlaufen und eine gemeinsame Seitenzone (15) sowie zwei äußere Seitenzonen (14 und 18) besitzen und daß die Elektroden je eine zentrale Zone und die anschließende äußere Seitenzone überdecken.

# FIG_1a

# FIG_1b

# FIG_1c

# FIG_2

# FIG_3

16  14          13          15      17   12

10

11

# FIG_4

$V_\pi$

10V

(a)

(b)

5V

100Hz    1kHz    10    100    1MHz    10MHz    F

# FIG_5

14  19    13        15      23      20    18

# FIG_6

TENSION INTER-ELECTRODES

TENSION MODULANTE ────── TENSION INUTILISEE

$R_1$ $R_2$

$C_1$ $C_2$